(19) Europäisches Patentamt
European Patent Office
Office européen des brevets

(11) EP 3 779 726 A1

(12) EUROPEAN PATENT APPLICATION

(43) Date of publication:
17.02.2021  Bulletin 2021/07

(51) Int Cl.:
G06F 16/332 (2019.01)

(21) Application number: 19191165.0

(22) Date of filing: 12.08.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Bayerische Motoren Werke
Aktiengesellschaft
80809 München (DE)

(72) Inventors:
• Hu, Wangsu
Chicago, IL 60661 (US)
• Tian, Jilei
Chicago, IL 60605 (US)

(54) **SYSTEM, METHOD, AND MEDIUM FOR LOW COMPLEXITY AND RICH SEMANTIC AUTOMATIC QUESTION ANSWERING**

(57)     Given a data processing system, it is an objective of the present invention to reduce semantic modelling computational load for finding an answer to a query. The objective is solved by the system comprising: a storage medium (100) holding data representing a set of vectors (q1', q2', q3', q4', q5') and a set of answer strings (A1, A2, A3, A4, A5) wherein each vector can be pre-calculated by computation-expensive semantic modelling and then mapped (m1, m2, m3, m4, m5) to an answer string, and each vector represents a question; and a shallow similarity neural network (NN) is able to effectively processing the similarity from the discriminative feature that is specifying an input in the form of two vectors (qa', qb'), and then trained to provide similarity (s) as output; wherein the system comprises means for carrying out the steps: a) receive a query (210); b) generate a vector from the query (220); c) iteratively (230) feed the neural network with a pair of vectors including the vector generated from step b) and one vector from the set of vectors; d) based on similarity outputs from the neural network (NN) generate in step c), either reject the query if none of matched vector from the set of of vectors (q1', q2', q3', q4', q5') or find (240) at least one vector as similar vector from the set of vectors (q1', q2', q3', q4', 5'); e) based on the similar vector, use the map (m1, m2, m3, m4, m5) to find a corresponding answer string (260); f) respond to the query using the corresponding answer string (270). Because of the pre-calculated a set of vectors, system is not able to optimally jointly train them together to highlight the discriminative, the effective discriminative feature layer is introduced to optimize the performance, together with shallow similarity neural network that naturally requires small number of training corpus due to small number of parameters of similarity neural networks.

FIG 5

**Description**

The invention relates to a system, method, and medium for providing low complexity and rich semantic automatic question answering according to claim 1, claim 5, and claim 9, respectively.

State of the art well-performed and general-purposed semantic modelling e.g., Bidirectional Encoder Representations from Transformers (BERT) base model, has very high complexity as it is generally trained on very large corpus with a few hundred millions parameters. It can be fine-tuned adapted on labelled sentence-to-sentence pairs to model query and question jointly and can extract the most discriminative features, but also has high complexity and computational load. To assess if an incoming online query corresponds to a stored question in a question and answer (Q&A) database, inference must be run in real-time on the entire network for each question in the database, resulting in substantial computational demands.

The term "question" is herein used to refer to a question with a pre-stored answer in a question and answering (Q&A) manner. The term "query" is herein used for incoming requests. It is an aim of the invention to effectively find a corresponding question to an incoming query, and based on the found question, provide the corresponding answer. Due to the variety of ways to ask the same thing, finding the corresponding question in the database (if it exist) is not trivial.

The deficiency identified in the art is solved by the system of claim 1, method of claim 5, and storage medium of claim 9.

In particular, the deficiency is solved by a system comprising a storage medium holding data representing pre-calculated a set of vectors by semantic model (e.g. deep neural networks), and a set of answer strings wherein each vector in the storage medium can be mapped to an answer string, and each vector represents a question; and a similarity modelling (e.g. a shallow neural network) specifying an input in the form of two vectors, and trained to provide similarity as output; wherein the system is configured to perform the steps:

a) receive a query;
b) generate a vector from the query by using a semantic model;
c) iteratively feed the similarity model with a pair of vectors including the vector generated from step b) and one vector from the set of vectors;
d) based on similarity outputs from the similarity model generated in step c), find at least one vector as similar vector from the set of vectors;
e) based on the similar vector, use the map to find a corresponding answer string;
f) respond to the query using the corresponding answer string.

Because of the pre-calculated a set of vectors, system is not able to optimally jointly train them together to highlight the discriminative, the effective discriminative feature layer is introduced to optimize the performance, together with shallow similarity neural network that naturally requires small number of training corpus due to small number of parameters of similarity neural networks.

Advantages include improved performance and reduced network complexity while keeping the semantic richness in the model. Using the same inference hardware, the performance (e.g. response time) is significantly improved without substantially losing prediction accuracy.

The elements of the vectors are preferably numbers, preferably real numbers and preferably represented by floating point representation. Each element in the vector preferably jointly represent a semantic feature. Each vector may correspond to a question and represent the question in semantic space.

In one embodiment, the vectors in the set of vectors is generated by semantic model, e.g. embedding questions, such as work embedding; and
wherein step b) includes embedding the query. Embedding is ranged from simple word level, phrase or semantic-rich sentence level like BERT.

In one embodiment, the neural network is trained on pairs of query vectors and similarities between the vectors, wherein each pair is pre-classified as either being semantically equal of semantically different.

In one embodiment, step d) includes finding a number vectors with the highest ranked similarities;
wherein the system is further configured to provide a user with a list of questions corresponding to the number of vectors; and
the system further configured to, based on a selection of a question by the user, use the map to find the corresponding answer string.

The deficiency is further solved by a method for generating an answer to a query, the method comprising:

a) receive a query;
b) generate a vector from the query by semantic model;
c) iteratively feed a similarity model with a pair of vectors including the vector generated from step b) and each vector from a set of vectors stored in a storage medium to generating similarity outputs between the vector and each of the set of vectors;
d) based on similarity outputs from the neural network, select at least one vector as similar vector from the set of vectors;
e) based on the similar vector, use a map to find a corresponding answer string;
f) respond to the query using the corresponding answer string.

In one embodiment, the vectors in the set of vectors is generated by embedding a set of questions; and

wherein step b) includes embedding (305) the query.

In one embodiment, the neural network is trained on pairs of query vectors and similarities between the vectors, wherein each pair is pre-classified as either being semantically equal of semantically different.

In one embodiment, step d) includes finding a number (such as five) vectors with the highest ranked similarities;

wherein the system is further configured to provide a user with a list of questions corresponding to the number of vectors; and

the system further configured to, based on a selection of a question by the user, use the map to find the corresponding answer string.

The deficiency is further solved by a computer-readable medium comprising instructions which, when executed by a computer, cause the computer to carry out the any of the above mentioned methods.

The benefits and advantages of the methods and the medium are equal or similar to the advantages of the above-mentioned system.

In the following, embodiments of the invention are described with respect to the figures, wherein

Fig. 1    shows a storage medium;
Fig. 2    shows embedding;
Fig. 3    shows semantic model (e.g. deep neural networks) layers;
Fig. 4    shows similarity model (e.g. shallow neural networks) layers;
Fig. 5    shows method steps;
Fig. 6    shows similarity neural network training;

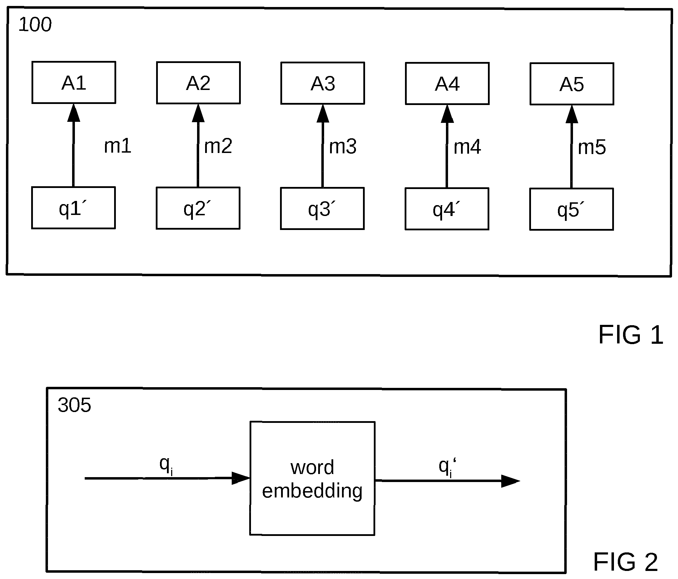

Fig. 1 shows a storage medium 100 holding data representing a set of vectors q1', q2', q3', q4', q5' and a set of answer strings A1, A2, A3, A4, A5 wherein each vector can be mapped m1, m2, m3, m4, m5 to an answer string, and each vector represents a question (not shown). The mapping from vector to answer string may be implemented in any suitable direct or indirect way. The answer strings and vectors may be contained in the same data structure. The vectors may also be mapped using means of a relational database, or by pointers, or a lookup table. Each vector is typically a word embedding of a question, wherein the answer string the vector maps to is an answer to the corresponding question.

Fig. 2. shows word embedding of query string $q_i$ into embedded vector $q_i'$, The Semantic Embedding maps a set of words, phrases and sentence like query and questions in QnA to vectors of numerical values. For example, semantic embedding is typically performed by a learned neural network model like BERT. Suitable word embedding models used for word embedding includes, but is not limited to, Word2Vec by Google, GloVe by Stanford, and fastText by Facebook.

Any other suitable word embedding may be used. To enrich the semantics, support multilinguality and generality, we take BERT into use, but no limited to.

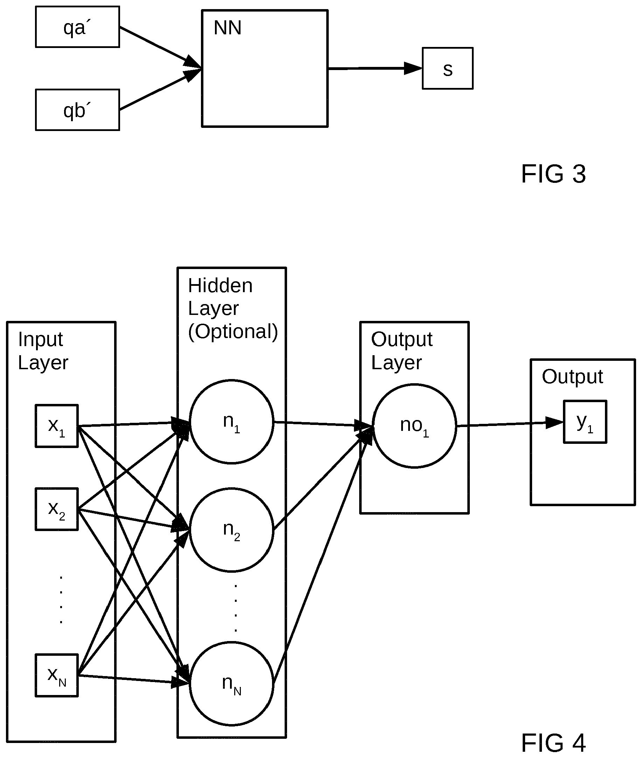

Fig. 3 shows the semantic model by deep neural networks like BERT, wherein the neural network is configured to receive a pair of query and question as input, and trained to provide embedded vectors for query and question respectively, as output. The two vectors are each related to a query and question string Fig. x shows the discriminative feature layer. It is used to calculate discriminative feature of the query and question based on their semantic embedded vectors. It output the discriminative vector that feed into a similarity model that may be provided using a shallow neural network classifier as described below. Fig. 4 shows a similarity model by neural network providing similarity output from a pair of input vectors. One of the vectors may be a semantic embedding of a received query and the other vector may be a semantic embedding of a question stored in a database, to which an answer is mapped. The similarity model is typically configured and trained to output a similarity value between 0 (the question and question are different) to 1 (the question and query are similar)..

Input layer: A set of input vector where each neuron represents the feature ($x_1$, $x_2$, ... $x_N$) corresponds to elements of the input vectors qa', qb'. The neural network receives the inputs and passes them to the next layer.

Hidden layer (optional): A set of H numbers of neurons where each neuron has a weight vector assigned to it. It takes the input $F$ = $x_1$, $x_2$, ... $x_N$ from previous layer and performs a dot product of inputs $F$ and weights $w_h$, add the bias $b_h$, applies activation function (e.g. sigmoid function), produces the result $F'$ and passes the result to next layer.

$$Z_h = F \times w_h + b_h$$

$$F' = \frac{1}{1 + e^{Z_h}}$$

Output layer: Similar to hidden layer, the output layer does a dot product of inputs $F'$ from the previous layer and weights $w_k$, add the bias $b_k$, except applying SoftMax function to generate a number ($y_1$) indicating whether qa' and qb' are semantic equivalent (1) or not (0).

$$Z_k = F' \times w_k + w_k$$

$$Pr(\tilde{y} = k | F) = \frac{e^{Z_k}}{\sum_k^K e^{Z_k}}$$

where $k$ is the class (0 or 1), all $w$ and $b$ are the parameters can be optimized using the fine-tuning step.

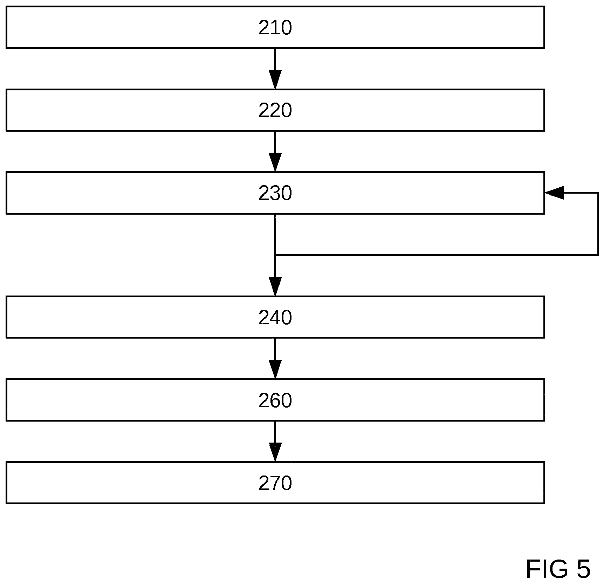

Fig. 5 shows a method for answering a query, including a) receive a query 210, b) generate a vector from the query 220, c) iteratively 230 feed the neural network with a pair of vectors including the vector generated from step b) and one vector from the set of vectors, d) based on similarity outputs from the neural network NN generated in step c), find 240 at least one vector as similar vector from the set of vectors q1', q2', q3', q4', q5', e) based on the similar vector, use the map m1, m2, m3, m4, m5 to find a corresponding answer string 260, f) respond to the query using the corresponding answer string 270.

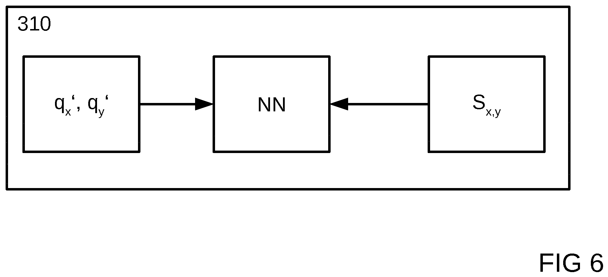

Fig. 6 shows training 310 of neural network NN (such as neural network shown in Fig. 3 and Fig. 4). The neural network is trained on pairs of query vectors $q_x$, $q_y$ and corresponding pre-stored similarities $s_{x,y}$, wherein question in each pair is pre-classified as either being semantically equal (such as $s_{x,y}=1$) or semantically different (such as $s_{x,y}=0$). After training, the neural network may perform inference according to the invention.

Optional, a simple one-dense-layer classification neural network may be used to classify the domain $k$ (e.g. vehicle, banking, etc.) of the query. The output of the neural network is

$$Z_k = E(Query_i) \times \boldsymbol{w}_k + \boldsymbol{b}_k$$

$$\tilde{y}_k = Pr(\tilde{y} = k | E(Query_i)) = \frac{e^{Z_k}}{\sum_k^K e^{Z_k}}$$

$$\tilde{k} = \underbrace{argmax}_{1 \leq k \leq K} \tilde{y}_k | E(Query_i)$$

where $\tilde{k}$ is the predicted domain for the input query embedding, $\boldsymbol{w}$, $\boldsymbol{b}$ are the parameters that can be optimized based on the ground truth $y$.

$$(\boldsymbol{w}^*, \boldsymbol{b}^*) = \underbrace{argmin}_{\boldsymbol{w}, \boldsymbol{b}} \left\| \tilde{k} - k \right\|$$

The classification layer may reduce the confusion size and greatly decrease the computation time. Given $n$ samples of QA pairs stored in the database, $m$ samples of user queries, $K$ pre-defined domains, the classification layer can reduce the computation time from O($nm$) to O($nm/K$). In particular when the sample size of the offline QA pairs is relatively small, such program is advantageous.

During inference, the vector generated from the received query is iteratively combined with each vector in the data storage to generate an amount or similarity to the query for each question. The one or more vectors with highest similarities may be ranked as most closely corresponding to the incoming query.

After ranking the similarity score between $i^{th}$ query < $Query_i$ > and $j^{th}$ question from questions {< $Question_1$ >, < $Question_2$ >, ..., < $Question_j$ >}, the index

$\hat{j}$ of the matched question < $Question_{\hat{j}}$ > can be found, having the highest similarity against the query for choosing QA pair < $Question_{\hat{j}}$, $Answer_{\hat{j}}$ >, to return the answer < $Answer_{\hat{j}}$ >.

$$\tilde{y}_j = Pr(\tilde{y} = 1 | \boldsymbol{F}(Query_i, Question_j))$$

$$\hat{j} = \underbrace{argmax}_{j} (\tilde{y}_j) => Return: \ Answer_{\hat{j}}$$

Fine tuning only happens on the similarity layer which can greatly lower the complexity and computation time during inference.

$$(\boldsymbol{w}^*, \boldsymbol{b}^*) = \underbrace{argmin}_{\boldsymbol{w}, \boldsymbol{b}} \left\| \hat{j} - j \right\|$$

The prediction accuracy by exact match (1-best) of the $\hat{j}$ and $j$ may be used.

In one embodiment, the neural network may also be trained online to dynamically adapt to new patterns in both < query > and < question >. Assuming a trained model ($\boldsymbol{w}, \boldsymbol{b}$) at time $t$, the new data < query > and < question > can be applied to find the new optimal ($\boldsymbol{w}^*, \boldsymbol{b}^*$) that can minimize the prediction error between estimated $\hat{j}(t + \Delta t)$ against the ground truth $j(t + \Delta t)$.

$$(\boldsymbol{w}^*, \boldsymbol{b}^*) = \underbrace{argmin}_{\boldsymbol{w}, \boldsymbol{b}} \left\| \hat{j}(t + \Delta t) - j(t + \Delta t) \right\|$$

As an example, instead of only providing a user with an answer corresponding to the highest ranked vector, a number of best matches (such as the five best matches), may be shown to the user based on their similarity ranking. The user may select the answer best fitting to the provided query. Alternatively, the user may be provided with the highest ranked questions, and asked which most closely corresponds to the asked query. The user selection may be used as classification of the < query > and < question > pair and used to train the neural network.

**Claims**

1. A data processing system comprising:

   a storage medium (100) holding data representing pre-calculated a set of vectors (q1', q2', q3', q4', q5') and a set of answer strings (A1, A2, A3, A4, A5) wherein each vector can be mapped (m1, m2, m3, m4, m5) to an answer string, and each vector represents a question; and
   a neural network (NN) specifying an input in the form of two vectors (qa', qb') and trained to provide similarity (s) as output;
wherein the system comprises means for carrying out the steps:

a) receive a query (210);
b) generate a vector from the query (220);
c) iteratively (230) feed the neural network with a pair of vectors including the vector generated from step b) and one vector from the set of vectors;
d) based on similarity outputs from the neural network (NN) generate in step c), find (240) at least one vector as similar vector from the set of vectors (q1', q2', q3', q4', q5');
e) based on the similar vector, use the map (m1, m2, m3, m4, m5) to find a corresponding answer string (260);
f) respond to the query using the corresponding answer string (270).

2. The system of claim 1,
wherein the vectors in the set of vectors is generated by word embedding (305) a set of questions; and wherein step b) includes word embedding (305) the query.

3. The system of claim 1 or claim 2,
wherein the neural network (NN) is trained (310) on pairs of query vectors ($q_x$, $q_y$) and similarities ($s_{x,y}$) between the vectors, wherein each pair is pre-classified as either being semantically equal of semantically different.

4. The system of any of the claims claim 1 to 3,
wherein step d) includes finding a number (such as five) vectors with the highest ranked similarities; wherein the system is further configured to provide a user with a list of questions corresponding to the number of vectors; and
the system further configured to, based on a selection of a question by the user, use the map to find the corresponding answer string.

5. A computer-implemented method for generating an answer to a query, the method comprising steps:

a) receive a query (210);
b) generate a vector from the query (220);
c) iteratively (230) provide a neural network with a pair of vectors as input, including the vector generated from step b) and each vector from a set of vectors stored in a storage medium to generate similarity outputs between the vector and each of the set of vectors;
d) based on similarity output from the neural network (NN) in step c), select at least one vector as similar vector from the set of vectors (q1', q2', q3', q4', q5');

e) based on the similar vector, use a map (m1, m2, m3, m4, m5) to find a corresponding answer string (260);
f) respond to the query using the corresponding answer string (270).

6. The method of claim 5,
wherein the vectors in the set of vectors is generated by word embedding (305) a set of questions; and wherein step b) includes word embedding (305) the query.

7. The system of claim 5 or claim 6,
wherein the neural network (NN) is trained (310) on pairs of query vectors ($q_x$, $q_y$) and similarities ($s_{x,y}$) between the vectors, wherein each pair is pre-classified as either being semantically equal of semantically different.

8. The system of any of the claims claim 5 to 7,
wherein step d) includes finding a number (such as five) vectors with the highest ranked similarities; wherein the system is further configured to provide a user with a list of questions corresponding to the number of vectors; and
the system further configured to, based on a selection of a question by the user, use the map to find the corresponding answer string.

9. Computer-readable medium comprising instructions which, when executed by a computer, cause the computer to carry out the steps of any of the claims 5 to 8.

FIG 1

FIG 2

FIG 3

FIG 4

```
┌─────────────────────────────────────────┐
│                   210                     │
└─────────────────────────────────────────┘
                      │
                      ▼
┌─────────────────────────────────────────┐
│                   220                     │
└─────────────────────────────────────────┘
                      │
                      ▼
┌─────────────────────────────────────────┐
│                   230                     │◄──┐
└─────────────────────────────────────────┘   │
                      │                        │
                      ├────────────────────────┘
                      ▼
┌─────────────────────────────────────────┐
│                   240                     │
└─────────────────────────────────────────┘
                      │
                      ▼
┌─────────────────────────────────────────┐
│                   260                     │
└─────────────────────────────────────────┘
                      │
                      ▼
┌─────────────────────────────────────────┐
│                   270                     │
└─────────────────────────────────────────┘
```

FIG 5

310

$q_x{}^\prime, q_y{}^\prime$ → NN ← $S_{x,y}$

FIG 6

Europäisches
Patentamt

European
Patent Office

Office européen
des brevets

# EUROPEAN SEARCH REPORT

Application Number

EP 19 19 1165

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/081776 A1 (BABYLON PARTNERS LTD [GB]) 2 May 2019 (2019-05-02) * abstract * * page 5, line 14 - line 34 * ----- | 1-9 | INV. G06F16/332 |
| X | WO 2018/077655 A1 (KONINKLIJKE PHILIPS NV [NL]) 3 May 2018 (2018-05-03) * abstract * * paragraph [0054]; figure 6 * ----- | 1-9 | |

**TECHNICAL FIELDS SEARCHED (IPC)**

G06F

The present search report has been drawn up for all claims

| Place of search | Date of completion of the search | Examiner |
|---|---|---|
| Munich | 13 February 2020 | Hauck, Rainer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 19 1165

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2020

| Patent document cited in search report | Publication date | Patent family member(s) | Publication date |
|---|---|---|---|
| WO 2019081776 A1 | 02-05-2019 | NONE | |
| WO 2018077655 A1 | 03-05-2018 | CN 109983454 A | 05-07-2019 |
| | | EP 3529717 A1 | 28-08-2019 |
| | | JP 2019537126 A | 19-12-2019 |
| | | US 2020050636 A1 | 13-02-2020 |
| | | WO 2018077655 A1 | 03-05-2018 |

EPO FORM P0459

For more details about this annex : see Official Journal of the European Patent Office, No. 12/82